# EUROPEAN PATENT APPLICATION

(11) **EP 4 632 915 A1**
(43) Date of publication of application: **15.10.2025**
(21) Application number: 23907485.9
(22) Date of filing: 29.11.2023
(51) Int. Cl.: H01M 50/342, H01M 50/242, H01M 50/105, H01M 10/52, H01M 50/178

(54) **SECONDARY BATTERY**

(30) Priority: 23.12.2022 KR 20220183714; 31.08.2023 KR 20230115683
(71) Applicant: LG Energy Solution, Ltd., Seoul 07335 (KR)
(72) Inventor: YUN, Hyun Woong, Daejeon 34122 (KR); KIM, Yo Jin, Daejeon 34122 (KR)
(74) Representative: Hoffmann Eitle
(86) International application number: PCT/KR2023/019476
(87) International publication number: WO 2024/136199

(57) **Abstract**

The present invention relates to a secondary battery. Specifically, the present invention provides a secondary battery comprising: an electrode assembly which comprises a cathode, an anode, and a separator stacked together; a capture unit within which a negative pressure is established and which is disposed in a position adjacent to the electrode assembly; and a battery case in which the electrode assembly and the capture unit are accommodated, wherein, if the internal pressure in the battery case is a predetermined pressure or higher, the capture unit is broken and captures gas to regulate the internal pressure.

## Description

### TECHNICAL FIELD

### CROSS-REFERENCE TO RELATED APPLICATION

The present application claims the benefit of the priority of Korean Patent Application Nos. 10-2022-0183714, filed on December 23, 2022, and 10-2023-0115683, filed on August 31, 2023, which are hereby incorporated by reference in their entirety.

### TECHNICAL FIELD

The present invention relates to a secondary battery, and more particularly, to a secondary battery that is capable of collecting a gas generated in the secondary battery to adjust an internal pressure.

### BACKGROUND ART

Currently commercialized secondary batteries include nickel cadmium batteries, nickel hydride batteries, nickel zinc batteries, and lithium secondary batteries. Among them, when compared to nickel-based secondary batteries, the lithium secondary batteries are attracting attention because of their advantages such as freedom of charging and discharging, very low self-discharge rate, and high energy density due to almost no memory effect. Recently, secondary batteries have been widely used not only in small devices such as portable electronic devices, but also in medium-to-large devices such as vehicles and power storage devices. For these battery packs, a large number of secondary batteries may be electrically connected to each other to increase in capacity and output. Here, pouch-type secondary batteries are becoming more widely used due to their advantages such as easy stacking and light weight. The pouch-type secondary batteries may be generally manufactured through a process in which an electrolyte is injected while an electrode assembly is accommodated in a pouch exterior, and the pouch exterior is sealed. A gas may be generated inside a secondary battery as charging and discharging are repeated.

Here, there is a problem that the generated gas increases in internal pressure of the secondary battery and expands the battery case, and in severe cases, a hole is generated in the battery case due to the increasing internal pressure to cause rapid deterioration of the secondary battery.

### DISCLOSURE OF THE INVENTION

### TECHNICAL PROBLEM

The present invention is intended to solve the above problem and provides a secondary battery in which, when an internal pressure of the secondary battery increases within a predetermined pressure range due to a gas generated in an electrode assembly, the gas inside the secondary battery is collected to adjust the internal pressure and delay volume expansion of the secondary battery.

### TECHNICAL SOLUTION

According to a first embodiment of the present invention, the present invention provides a secondary battery including: an electrode assembly in which a positive electrode, a negative electrode, and a separator are stacked; a collection unit in which a negative pressure is generated and which is disposed at a position adjacent to the electrode assembly; a battery case configured to accommodate the electrode assembly and the collection unit, wherein the collection unit is damaged when an internal pressure of the battery case becomes a predetermined pressure to collect a gas, thereby adjusting the internal pressure.

In addition, a cutoff line along which the damage is induced may be disposed on an outer surface of the collection unit.

In addition, the collection unit may be damaged when the internal pressure of the battery case is 0.1 Mpa or more and 4 Mpa or less.

In addition, the collection unit may be made of a plastic or metal material.

In addition, the electrode assembly may be provided with a plurality of electrode tabs on one surface thereof, and the collection unit may be disposed to face the surface on which the electrode tabs are disposed.

In addition, the collection unit may include a first collection unit disposed at each of both sides of each of the electrode tabs.

In addition, the collection unit may include a second collection unit disposed to face the electrode tab at an upper or lower portion of the electrode tab and having an inclined surface corresponding to an inclination defined on the electrode tab.

In addition, the collection unit may include a third collection unit disposed on each of upper and lower portions of the electrode tab so that the electrode tab is disposed in a space therebetween.

In addition, the collection unit may include a fourth collection unit disposed at one side of the electrode assembly in a longitudinal direction of the electrode assembly.

In addition, the collection unit may include a fifth collection unit provided in a longitudinal direction of the electrode assembly and disposed to be stacked on an upper or lower portion of the electrode assembly.

According to a second embodiment of the present invention, the present invention provides a secondary battery module including: a plurality of secondary batteries; and a module case configured to accommodate the plurality of secondary batteries, wherein each of the secondary batteries includes: an electrode assembly in which a positive electrode, a negative electrode, and a separator are stacked; a collection unit in which a negative pressure is generated and which is disposed at a position adjacent to the electrode assembly; a battery case configured to accommodate the electrode assembly and the collection unit, wherein the collection unit is damaged when an internal pressure of the battery case becomes a predetermined pressure to collect a gas, thereby adjusting the internal pressure.

### ADVANTAGEOUS EFFECTS

According to the present invention, when the internal pressure of the secondary battery increases within the predetermined range due to the gas generated in the electrode assembly, the gas may be collected in the secondary battery to prevent the internal pressure from increasing and delay the volume expansion of the secondary battery, thereby improving the lifespan of the secondary battery.

### BRIEF DESCRIPTION OF THE DRAWINGS

FIG. 1 is an exploded view of a secondary battery in which a first collection unit is accommodated according to a first embodiment of the present invention.
(a) to (c) of FIG. 2 are perspective views illustrating examples of a first collection unit, a second collection unit, and a third collection unit of a collection unit according to embodiments of the present invention.
FIG. 3 is a cross-sectional view of the first collection unit that is taken along line AA' in (b) of FIG. 2.
FIG. 4 is an exploded view illustrating the secondary battery in which a fourth collection unit is accommodated according to the first embodiment of the present invention.
FIG. 5 is an exploded view illustrating the secondary battery in which a fifth collection unit is accommodated according to a first embodiment of the present invention.

### MODE FOR CARRYING OUT THE INVENTION

Hereinafter, it will be described about an exemplary embodiment of the present invention in conjunction with the accompanying drawings. However, the following drawings are intended to facilitate the understanding of the present invention and are only one embodiment of the present invention, and the scope of the present invention is not limited to the range described in the drawings. In addition, in the following drawings, the same symbols refer to the same components, and some components may be exaggerated, miniatured, or omitted for easier understanding of the invention.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First embodiment

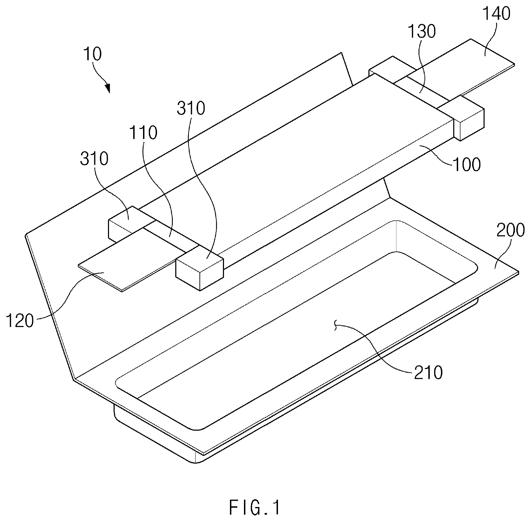

Referring to FIG. 1, a secondary battery 10 according to an embodiment of the present invention may include an electrode assembly 100, a battery case 200, and a collection unit 300.

The electrode assembly 100 may have a structure in which positive electrode current collector/positive electrode active material layer/separator/negative electrode active material layer/negative electrode current collector are sequentially stacked. The positive electrode current collector may include an area coated with the positive electrode active material layer and a positive electrode non-coating portion area that is not coated with the positive electrode active material, and the positive electrode non-coating portion area may be a positive electrode tab. The negative electrode current collector may include an area coated with a negative electrode active material layer and a negative electrode non-coating portion area that is not coated with the negative electrode active material, and the negative electrode non-coating portion area may be a negative electrode tab. The separator may include an electrically insulating material and may be disposed between the positive electrode current collector and the negative electrode current collector to prevent the current collectors having different polarities from being in contact with each other.

The electrode assembly 100 may be a stack type electrode assembly, a stack-folding type electrode assembly, or a jelly-roll type electrode assembly.

The first electrode tab 110 may be either a positive electrode non-coating portion or a negative electrode non-coating portion of the electrode assembly 100, and the first electrode tab 110 may protrude to extend in one direction from one surface of the electrode assembly 100.

Since the first electrode tab 110 protrudes from each of the positive electrode non-coating portion or the negative electrode non-coating portion of the electrode assembly 100 in one direction, the first electrode tab 110 may be provided in plurality.

The plurality of first electrode tabs 110 may be bonded to one surface or both surfaces of a first electrode lead 120, and at least a portion of the first electrode lead 120 may protrude outward from one side of the battery case 200. The first electrode tab 110 may be bonded to the first electrode lead 120 by welding.

The second electrode tab 130 may be a non-coating portion having a polarity that is opposite to that of the first electrode tab 110 in either the positive electrode non-coating portion or the negative electrode non-coating portion. The second electrode tab 130 may protrude to extend from the electrode assembly 100 in the other direction.

Since the first electrode tab 130 protrudes from each of the positive electrode non-coating portion or the negative electrode non-coating portion of the electrode assembly 100 in the other direction, the first electrode tab 110 may be provided in plurality.

The plurality of second electrode tabs 130 may be bonded to one surface or both surfaces of a second electrode lead 140, and at least a portion of the first electrode lead 140 may protrude outward from the other side of the battery case 200. The second electrode tab 130 may be bonded to the second electrode lead 140 by welding.

The first electrode lead 120 and the second electrode lead 140 may protrude in opposite directions.

The battery case 200 may include a first resin layer disposed on a stacked structure of an outer surface thereof, a second resin layer disposed on an inner surface thereof, and a metal layer disposed between the first resin layer and the second resin layer.

In the resin layer, since an insulating layer made of a polymer material has to have excellent resistance to external environments to protect the battery against the outside, the insulating layer requires excellent tensile strength and weather resistance with respect to a thickness thereof. For example, the insulating layer may made of a polyester-based resin such as polyethylene terephthalate (PET) and polyethylene naphthalate (PEN), a polyolefin-based resin such as polyethylene and polypropylene, a polystyrene-based resin such as polystyrene, a polyvinyl chloride-based resin, and a polychloride vinylidene-based resin, etc. The material may be used alone or in combination of two or more materials, and polyethylene terephthalate, polyethylene naphthalate, etc. may be preferably used.

The metal layer may serve as a base material that maintains mechanical strength and a barrier layer that prevents moisture and oxygen from being penetrated. Aluminum or an aluminum alloy may be used to exhibit a function of improving strength of the battery case in addition to a function of preventing gases, moisture, and the like from being introduced or discharged, and examples of the aluminum alloy may include alloy numbers 8079, 1N30, 8021, 3003, 3004, 3005, 3104, and 3105, which may be used alone or in combination of two or more. Among the aluminum alloys, alloy numbers 8079, 1N30, 8021 and 3004 may be particularly preferably used as the barrier layer.

In the second resin layer, an area that is thermally fused may form a sealing part on an edge area of the battery case 200, and an area that is not thermally fused may form an inner surface of the battery case 200. The second resin layer may be made of a polyolefin-based resin material. Casted polypropylene that is generally used may be used for the polyolepin-based resin layer. In addition, the second resin layer may be made of a material selected from the group consisting of a polyolefin-based resin such as chlorinated polypropylene, polyethylene, an ethylene propylene copolymer, a polyethylene and acrylic acid copolymer, and a polypropylene and acrylic acid copolymer, but not limited to the above-described materials.

An accommodation part 210 provided in a concave shape may be provided in the battery case 200 to accommodate the electrode assembly 100 and the collection unit 300. The accommodation part 210 may be provided to have a predetermined width and depth to accommodate the electrode assembly 100 and the collection unit 300.

The collection unit 300 may be damaged when the internal pressure of the battery case 200 reaches a predetermined pressure due to the gas generated as the electrode assembly 100 is continuously and repeatedly charged and discharged. A negative pressure may be generated in an internal space of the collection unit 300, and thus, when the internal pressure of the battery case 200 becomes a predetermined pressure to damage the collection unit 300, the gas may be introduced into the inner space of the collection unit 300 due to a difference in pressure between the outside and the inside of the collection unit 300, and thus, the internal pressure of the battery case 200 may be adjusted. More particularly, the predetermined pressure may mean that the internal pressure of the battery case 200 is 0.1 Mpa or more and 4 Mpa or less. Here, the negative pressure may mean a state in which the internal pressure of the collection unit 300 is lower than the internal pressure of the battery case 200.

A negative pressure may be generated in the collection unit 300, and when the internal pressure of the battery case 200 increases by the gas generated from the electrode assembly, the collection unit 300 may be disposed at a position that is adjacent to the electrode assembly so as to be immediately damaged.

Cutoff lines 311, 321, 331, 341, and 351 that induce damage may be defined on an outer surface of the collection unit 300. Each of the cutoff lines 311, 321, 331, 341, and 351 may be provided in a shape that induces the damage of the collection unit 300 so that the inside and outside of the collection unit 300 communicate with each other, but are not limited thereto. For example, each of the cutoff lines 311, 321, 331, 341, and 351 may be provided linearly or in a shape such as a circle or square.

The collection unit 300 may be made of plastic or a metal. Although not limited thereto, for example, the collection unit 300 may be made of a plastic material such as polyethylene (PE), polypropylene (PP), polystyrene (PS), polyethylene terephthalate (PET), polyamides (PA), polyester (PES), polyvinyl chloride (PVC), polyurethanes (PU), polycarbonate (PC), and polyvinylidene chloride (PVDC), a metal such as aluminum, copper, lead, zinc, tin, iron, stainless steel, tungsten, chromium, and nickel, or an alloy material of the above-described two or more materials.

When the internal pressure of the battery case 200 increases due to the gas generated from the electrode assembly 100, the damage of the outer surface of the collection unit along the cutoff lines 311, 321, 331, 341, and 351 may be induced due to a pressure applied to the cutoff lines 311, 321, 331, 341, and 351 by the gas contained in the battery case 200.

Each of the cutoff lines 311, 321, 331, 341, and 351 may be provided in a notch shape in a cross-section on the outer surface of the collection unit 300, and each of the cutoff lines 311, 321, 331, 341, and 351 may have inclinations that are opposite to each other at both sides and is changed sharply so that stress is concentrated at a vertex of a central portion of the notch shape. The cutoff lines 311, 321, 331, 341, and 351 may be induced to be damaged first even though the stress is concentrated at the vertex defined along a center in a longitudinal direction of each of the cutoff lines 311, 321, 331, 341, and 351 to apply substantially the same or similar pressure to the entire one surface of the collection unit 300. Thus, predictability of the internal pressure that is changed as the secondary battery 10 is repeatedly charged and discharged may be improved. In addition, even if the secondary battery 10 is continuously and repeatedly charged and discharged, the change in internal pressure of the secondary battery 10 may be mitigated to reduce an amount of change of the internal pressure, thereby reducing possibility of the battery case 200 being damaged by the internal pressure, and as a result, the lifespan of the secondary battery 10 may be improved.

The cutoff lines 311, 321, 331, 341, and 351 may be disposed on a surface that faces the electrode assembly 100 on the outer surface of the collection unit 300 so that the cutoff lines 311, 321, 331, 341, and 351 may be immediately damaged to collect the gas when the internal pressure of the battery case 200 increases to a predetermined pressure by the gas generated from the electrode assembly 100. More particularly, the predetermined pressure may mean that the internal pressure of the battery case 200 is 0.1 Mpa or more and 4 Mpa or less.

The plurality of cutoff lines 311, 321, 331, 341, and 351 may be provided on the collection unit 300, and the plurality of cutoff lines 311, 321, 331, 341, and 351 may be arranged according to a predetermined arrangement.

The collection unit 300 according to embodiments may include a first collection unit 310, a second collection unit 320, a third collection unit 330, a fourth collection unit 340, and a fifth collection unit 350. The description of the collection unit 300 described above may be commonly applied to the first collection unit 310, the second collection unit 320, the third collection unit 330, the fourth collection unit 340, and the fifth collection unit 350.

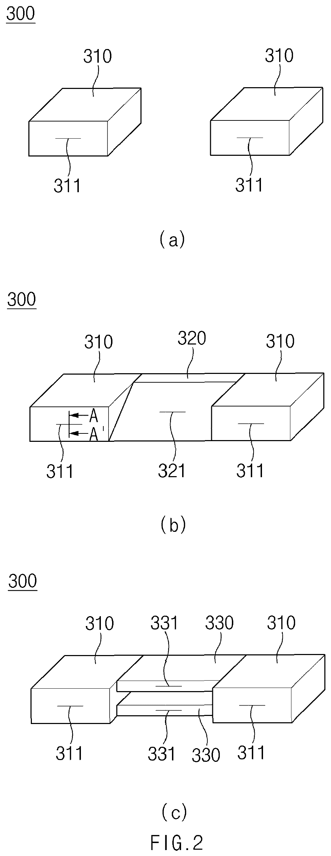

When described with reference to (a) of FIG. 2, in the first embodiment of the collection unit 300, the first collection unit 310 may be disposed to face the surface of the electrode assembly 100, on which the electrode tab is disposed, may be disposed at both sides of the electrode tab.

The first collection unit 310 may be disposed at both the sides of the electrode tab protruding from one surface of the electrode assembly 100 and may be disposed in a space between one surface of the electrode assembly 100 and the inner surface of the battery case 200.

A hollow may be defined inside the first collection unit 310, and a negative pressure may be generated in the hollow defined inside the first collection unit 310.

The shape of the first collection unit 310 may be, for example, a hexahedron. However, it is not limited thereto, and the shape of the first collection unit 310 may correspond to or similar to a shape of the space defined between one surface of the electrode assembly 100 and the inner surface of the battery case 200 at both the sides of the electrode tabs of the electrode assembly 100.

A first cutoff line 311 may be defined on an outer surface of the first collection unit 310 to induce damage to the first collection unit 310. More particularly, the first cutoff line 311 may be defined on a surface facing the electrode assembly 100.

The first cutoff line 311 may be configured so that, when the internal pressure of the battery case 200 increases to a predetermined pressure range by the gas generated from the electrode assembly 100, the first collection unit 310 is damaged along the first cutoff line 311 to induce opening of the inside of the first collection unit 310. The first collection unit 310, of which the inside is opened, may be adjusted to lower an average value of the internal pressure of the battery case 200, which increases due to the gas introduced into the first collection unit 310 in which the negative pressure is generated.

Although not limited thereto, the first cutoff line 311 may be provided, for example, in a linear or curved shape, or in the form of a shape such as a circle or square.

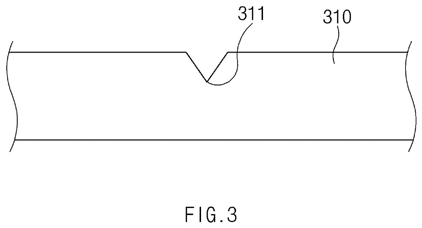

Referring to FIG. 3, a cross-sectional shape of the first cutoff line 311 may be provided in a notch shape, and directions of inclination at both sides around the vertex may be opposite to each other and be provided in a straight line so that the stress is concentrated at the vertex of the central portion of the notch shape. In the cross-sectional shape of the first cutoff line 311, even though a pressure is uniformly applied to the surface of the first collection unit 310, on which the first cutoff line 311 is defined, the first cutoff line 311 may be induced to be damaged first.

When described with reference to (b) of FIG. 2, in a second embodiment of the collection unit 300, the second collection unit 320 may be disposed on an upper or lower portion of the electrode tab of the electrode assembly 100.

In the case of the stacked or stack-folding electrode assembly 100, since the plurality of electrode tabs protrude from one surface of the electrode assembly 100, a difference in height between the electrode tabs may occur according to a thickness of the electrode assembly 100, and when the plurality of electrode tabs are bonded to one surface of the electrode lead, an inclination may occur on each of the electrode tabs. The electrode tab bonded from one surface of the electrode lead to the outermost side may be provided to be inclined mostly. Thus, the second collection unit 320 may have an inclined surface corresponding to the inclination defined at the outermost side of the electrode tab at the upper or lower portion of the electrode tab, and the second collection unit 320 may stably support the electrode tab.

A hollow may be defined inside the second collection unit 320, and a negative pressure may be generated in the hollow defined inside the second collection unit 320.

The first collection unit 310 and the second collection unit 320 may be disposed together to be adjacent to the electrode assembly 100.

A second cutoff line 321 may be defined on an outer surface of the second collection unit 320 to induce damage to the second collection unit 320. More particularly, the second cutoff line 321 may be defined on an inclined surface facing the electrode tab.

Although not limited thereto, the second cutoff line 321 may be provided, for example, in a linear or curved shape, or in the form of a shape such as a circle or square.

A cross-sectional shape of the second cutoff line 321 may be provided in a notch shape, and directions of inclination at both sides around the vertex may be opposite to each other and be provided in a straight line so that the stress is concentrated at the vertex of the central portion of the notch shape. In the cross-sectional shape of the second cutoff line 321, even though a pressure is uniformly applied to the surface of the second collection unit 320, on which the second cutoff line 321 is defined, the second cutoff line 321 may be induced to be damaged first.

When described with reference to (c) of FIG. 2, in a third embodiment of the collection unit 300, the third collection unit 330 may be disposed on each of upper and lower portion so that the electrode tab of the electrode assembly 100 is disposed between the third collection units 330.

The third collection unit 330 may be provided in plurality, and the plurality of third collection units 330 may be arranged to be spaced a predetermined distance from each other along the stacking direction of the electrode assembly 100. The electrode tab may be inserted into the spaced space.

A hollow may be defined inside the third collection unit 330, and a negative pressure may be generated in the hollow defined inside the third collection unit 330.

The shape of the third collection unit 330 may be, for example, a hexahedron. However, it is not limited thereto, and the shape of the third collection unit 330 may be provided to correspond according to the arrangement and angle of the electrode tab at each of the upper and lower portions of the electrode tab of the electrode assembly 10.

A third cutoff line 331 may be defined on an outer surface of the third collection unit 330 to induce damage to the third collection unit 330. More particularly, the third cutoff line 331 may be defined on a surface facing the electrode assembly 100.

Although not limited thereto, the third cutoff line 331 may be provided, for example, in a linear or curved shape, or in the form of a shape such as a circle or square.

A cross-sectional shape of the third cutoff line 331 may be provided in a notch shape, and directions of inclination at both sides around the vertex may be opposite to each other and be provided in a straight line so that the stress is concentrated at the vertex of the central portion of the notch shape. In the cross-sectional shape of the third cutoff line 331, even though a pressure is uniformly applied to the surface of the third collection unit 330, on which the third cutoff line 331 is defined, the third cutoff line 331 may be induced to be damaged first.

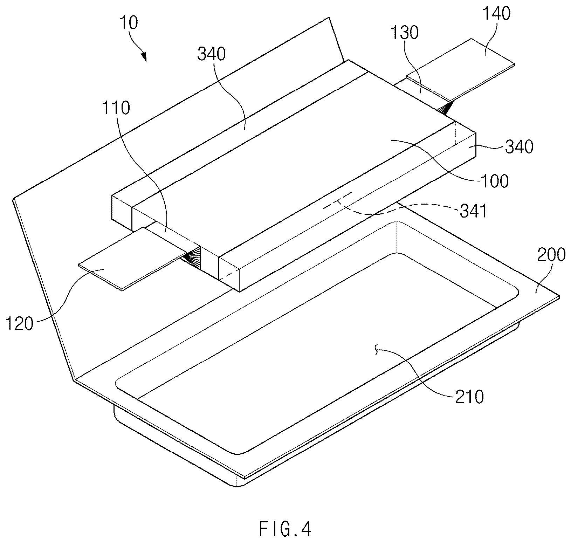

When described with reference to FIG. 4, in a fourth embodiment of the collection unit 300, the fourth collection unit 340 may be disposed at one side of the electrode assembly 110 in a longitudinal direction of the electrode assembly 100.

A hollow may be defined inside the fourth collection unit 340, and a negative pressure may be generated in the hollow defined inside the fourth collection unit 340.

The shape of the fourth collection unit 340 may be, for example, a cylindrical or square pillar shape. However, it is not limited thereto, and the shape of the fourth collection unit 340 may correspond to a shape of the space defined between one side of the electrode assembly 100 and the inner surface of the battery case 200.

The fourth collection unit 340 may be provided in plurality, and the plurality of fourth collection units 340 may be disposed at both sides of the electrode assembly 100 along the longitudinal direction of the electrode assembly 100.

A fourth cutoff line 341 may be defined on an outer surface of the fourth collection unit 340 to induce damage to the fourth collection unit 340. More particularly, the fourth cutoff line 341 may be defined on a surface facing the electrode assembly 100.

Although not limited thereto, the fourth cutoff line 341 may be provided, for example, in a linear or curved shape, or in the form of a shape such as a circle or square.

A cross-sectional shape of the fourth cutoff line 341 may be provided in a notch shape, and directions of inclination at both sides around the vertex may be opposite to each other and be provided in a straight line so that the stress is concentrated at the vertex of the central portion of the notch shape. In the cross-sectional shape of the fifth cutoff line 351, even though a pressure is uniformly applied to the surface of the fourth collection unit 340, on which the fourth cutoff lie 341 is defined, the fourth cutoff line 341 may be induced to be damaged first.

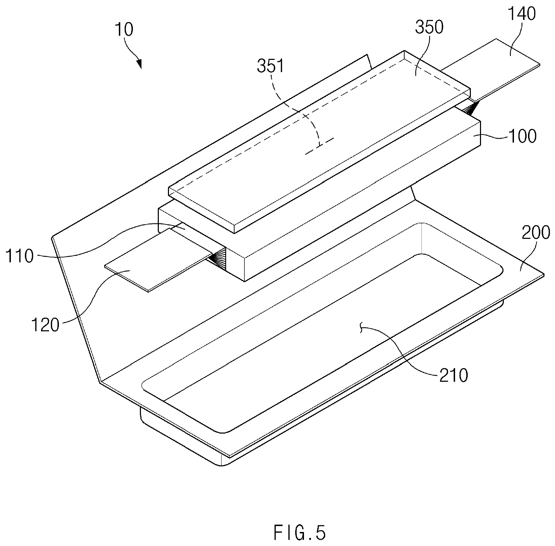

When described with reference to FIG. 5, in a fifth embodiment of the collection unit 300, the fifth collection unit 350 may be disposed to be stacked on an upper or lower portion of the electrode tab of the electrode assembly 100 in the longitudinal direction.

The fifth collection unit 350 may have a hollow inside, and the hollow formed inside may be formed with negative pressure.

The shape of the fifth collection unit 350 may be, for example, a square pillar shape. However, it is not limited thereto, and the shape of the first collection unit 350 may correspond to a shape of the space defined between the upper or lower portion of the electrode assembly 100 and the inner surface of the battery case 200.

The fifth collection unit 350 may be provided in plurality, and the plurality of fifth collection units 350 may be disposed at each of the upper and lower portions of the electrode assembly 100.

A fifth cutoff line 351 may be defined on an outer surface of the fifth collection unit 350 to induce damage to the fifth collection unit 350. More particularly, the fifth cutoff line 351 may be defined on a surface facing the electrode assembly 100.

Although not limited thereto, the fifth cutoff line 351 may be provided, for example, in a linear or curved shape, or in the form of a shape such as a circle or square.

A cross-sectional shape of the fifth cutoff line 351 may be provided in a notch shape, and directions of inclination at both sides around the vertex may be opposite to each other and be provided in a straight line so that the stress is concentrated at the vertex of the central portion of the notch shape. In the cross-sectional shape of the fifth cutoff line 351, even though a pressure is uniformly applied to the surface of the fifth collection unit 350, on which the fifth cutoff lie 351 is defined, the fifth cutoff line 351 may be induced to be damaged first.

### Second embodiment

According to a second embodiment of the present invention, a secondary battery module (not shown) of the present invention may include a plurality of secondary batteries 10 and a module case (not shown) accommodating the plurality of secondary batteries 10. Each of the secondary batteries 10 may include an electrode assembly 100 in which a positive electrode, a negative electrode, and a separator are stacked, a battery case 200 that accommodates the electrode assembly 100 and a collection unit 300, and the collection unit 300, in which a negative pressure is generated and which is disposed at a position adjacent to the electrode assembly 100. Detailed descriptions of the electrode assembly 100, the battery case 200, and the collection unit 300 may be replaced by the contents that are described above.

Although the present technology has been described through the above examples, the present technology is not limited thereto. The above embodiments may be modified or changed without departing from the spirit and scope of the present technology, and those skilled in the art will recognize that such modifications and changes also belong to the present technology.

### [Description of the Symbols]

- 10 :: Secondary battery
- 100 :: Electrode assembly
- 110 :: First electrode tab
- 120 :: First electrode lead
- 130 :: Second electrode tab
- 140 :: Second electrode lead
- 200 :: Battery case
- 210 :: Accommodation part
- 300 :: Collection unit
- 310 :: First collection unit
- 311 :: First cutoff line
- 320 :: Second collection unit
- 321 :: Second cutoff line
- 330 :: Third collection unit
- 331 :: Third cutoff line
- 340:: Fourth collection unit
- 341 :: Fourth cutoff line
- 350 :: Fifth collection unit
- 351 :: Fifth cutoff line

## Claims

1. A secondary battery comprising:
an electrode assembly in which a positive electrode, a negative electrode, and a separator are stacked;
a collection unit in which a negative pressure is generated and which is disposed at a position adjacent to the electrode assembly;
a battery case configured to accommodate the electrode assembly and the collection unit,
wherein the collection unit is damaged when an internal pressure of the battery case becomes a predetermined pressure to collect a gas, thereby adjusting the internal pressure.

2. The secondary battery of claim 1, wherein a cutoff line along which the damage is induced is disposed on an outer surface of the collection unit.

3. The secondary battery of claim 1, wherein the collection unit is damaged when the internal pressure of the battery case is 0.1 Mpa or more and 4 Mpa or less.

4. The secondary battery of claim 1, wherein the collection unit is made of a plastic or metal material.

5. The secondary battery of claim 1, wherein the electrode assembly is provided with a plurality of electrode tabs on one surface thereof, and
the collection unit is disposed to face the surface on which the electrode tabs are disposed.

6. The secondary battery of claim 5, wherein the collection unit comprises a first collection unit disposed at each of both sides of each of the electrode tabs.

7. The secondary battery of claim 6, wherein the collection unit comprises a second collection unit disposed to face the electrode tab at an upper or lower portion of the electrode tab and having an inclined surface corresponding to an inclination defined on the electrode tab.

8. The secondary battery of claim 6, wherein the collection unit comprises a third collection unit disposed on each of upper and lower portions of the electrode tab so that the electrode tab is disposed in a space therebetween.

9. The secondary battery of claim 1, wherein the collection unit comprises a fourth collection unit disposed at one side of the electrode assembly in a longitudinal direction of the electrode assembly.

10. The secondary battery of claim 1, wherein the collection unit comprises a fifth collection unit provided in a longitudinal direction of the electrode assembly and disposed to be stacked on an upper or lower portion of the electrode assembly.

11. A secondary battery module comprising:
a plurality of secondary batteries; and
a module case configured to accommodate the plurality of secondary batteries,
wherein each of the secondary batteries comprises:
an electrode assembly in which a positive electrode, a negative electrode, and a separator are stacked;
a collection unit in which a negative pressure is generated and which is disposed at a position adjacent to the electrode assembly;
a battery case configured to accommodate the electrode assembly and the collection unit,
wherein the collection unit is damaged when an internal pressure of the battery case becomes a predetermined pressure to collect a gas, thereby adjusting the internal pressure.
